# EUROPÄISCHE PATENTSCHRIFT

(11) **EP 1 917 750 B1**
(45) Veröffentlichungstag und Bekanntmachung des Hinweises auf die Patenterteilung: **28.04.2010**
(21) Anmeldenummer: 05789674.8
(22) Anmeldetag: 18.08.2005
(51) Int. Cl.: H04K 3/00

(54) **VERFAHREN ZUR ERKENNUNG EINES STÖRSENDERS, KOMMUNIKATIONSENDGERÄT UND AUSWERTEEINHEIT**
METHOD FOR THE RECOGNITION OF A JAMMING TRANSMITTER, COMMUNICATION TERMINAL, AND EVALUATION UNIT
PROCEDE POUR RECONNAITRE UN EMETTEUR PARASITE, TERMINAL DE COMMUNICATION ET UNITE D'EVALUATION

(43) Veröffentlichungstag der Anmeldung: 07.05.2008
(73) Patentinhaber: Cinterion Wireless Modules GmbH, 81669 München (DE)
(72) Erfinder: LANDGRAF, Robert, 12159 Berlin (DE)
(74) Vertreter: Eisenführ, Speiser & Partner
(86) Internationale Anmeldenummer: PCT/DE2005/001474
(87) Internationale Veröffentlichungsnummer: WO 2007/019814

(56) Entgegenhaltungen:
- WO-A-2005/112321
- US-A1- 2004 005 858

## Beschreibung

Die Erfindung betrifft ein Verfahren zur Erkennung eines Störsenders nach dem Oberbegriff des Anspruchs 1. Die Erfindung betrifft auch ein Kommunikationsendgerät und eine Auswerteeinheit für ein solches Verfahren.

Zellulare Funknetze sind seit vielen Jahren weit verbreitet. Sie ermöglichen einem sich bewegenden Teilnehmer, der ein Kommunikationsendgerät (Handy) bei sich trägt, von nahezu allen dicht besiedelten Punkten auf der Landfläche der Erde eine Telekommunikationsverbindung zu einem anderen Teilnehmer aufzubauen bzw. von einem Teilnehmer gerufen zu werden. Die größte flächendeckende Versorgung hat zur Zeit das Mobilfunknetz, welches nach dem GSM-Standard (Global System for Mobile Communications) spezifiziert ist und die meisten in Gebrauch befindlichen Kommunikationsendgeräte nutzen den GSM-Standard. Weitere GSM-Kommunikationsendgeräte sind so genannte GSM-Funkmodule, GSM-PCMCIA-Karten, GSM-Funkmodems etc..

Der GSM-Standard ermöglicht die Übermittlung von leitungsvermittelten und paketvermittelten Daten sowie Kurzmitteilungen (SMS). Die Netzarchitektur des GSM-Standards besteht aus einem MobilfunksendeSystem, auch Base Station Subsystem genannt, welches seinerseits aus Basisstationen (Base Transceiver Station) und zugeordneten Basisstationsteuerungseinheiten (Base Station Controller) besteht, und einem Vermittlungssystem mit den Komponenten Vermittlungsstelle (Mobile Switching Center), Besucherstandortregister (Visitor Location Register), Heimatstandortregister (Home Location Register), Authentifizierungsstelle (Authentification Center) und Kommunikationsendgeräteidentitätsregister (Equipment Identity Register). Die Kontrolle und Überwachung des Mobilfunknetzes erfolgt durch eine weitere Stelle (Operation and Maintenance Center). Der Zugriff auf die Funkressource erfolgt nach einer Mischung von Frequenzmultiplexverfahren und Zeitmultiplexverfahren. Die dabei benutzten Frequenzbänder sind das 900 MHz und 1800 MHz Frequenzband in Europa und das 850 MHz und 1900 MHz Frequenzband in Amerika. Die Frequenzbänder sind in eine Vielzahl von Frequenzkanälen unterteilt.

Benachbarte Basis-Stationen bedienen jeweils unterschiedliche Frequenzkanäle, um gegenseitige Interferenzen zu vermeiden.

Bewegt sich ein Teilnehmer aus einer von einer Basisstation versorgten Funkzelle heraus oder stellt das Kommunikationsendgerät fest, dass es zu einer anderen Basisstation eine ungestörtere Funkverbindung unterhalten kann, wird von dem Kommunikationsendgerät oder von einer der Basisstation zugeordneten Basisstationsteuerungseinheit ein Funkzellwechsel (Cell Reselection, Handover) von der aktuellen (mit der das Kommunikationsendgerät eine nutzdatenbasierte Funkverbindung herstellen kann) Basisstation zu einer anderen benachbarten Basisstation veranlasst und eine nutzdatenbasierte Funkverbindung besteht nun ausschließlich zwischen dem Kommunikationsendgerät und dieser ausgewählten Nachbarbasisstation.

Um diesen Funkzellwechsel gegebenenfalls vollziehen zu können, schreibt der GSM-Standard vor, dass das Kommunikationsendgerät ständig bestimmte Signalisierungskanäle von Nachbarbasisstationen abhört. Dabei werden in der Regel Signalisierungskanäle der Basisstation der aktuellen Funkzelle und Signalisierungskanäle der sechs benachbarten Basisstationen abgehört. Auf dem so genannten BCCH-Kanal bzw. PBCCH-Kanal der aktuellen Basisstation bzw. der jeweiligen Nachbarbasisstationen wird die Empfangsfeldstärke ausgewertet. Auf dem so genannten PCH-Kanal bzw. PPCH-Kanal wird das so genannte Paging-Telegramm (Funkruf-Telegramm) der aktuellen Basisstation und der jeweiligen Nachbarbasisstationen ausgewertet. Während es bei der Auswertung der Empfangsfeldstärke um die Tatsache geht, ob überhaupt die Empfangsleistung empfangener Signale ausreichend ist, stellt das Paging-Telegramm eine den Nachrichteninhalt betreffende Meldung dar. Kann das Kommunikationsendgerät das Paging-Telegramm dekodieren, so können Basisstation und Kommunikationsendgerät "sich verstehen".

Im GSM-Standard ist vorgeschrieben, dass das Kommunikationsendgerät, wenn es eine bestimmte Anzahl von Paging Telegrammen der aktuellen Basisstation nicht dekodieren konnte, dann einen Funkzellwechsel zu einer Nachbarbasisstation initiiert.

Aufbau und Funktionsweise von zellularen Funknetzen, insbesondere das GSM-Mobilfunksystem, sind dem Fachmann bekannt und in vielen Publikationen eingehend beschrieben, so dass hier keine weitere Erläuterung dazu notwendig ist. Die beschriebenen im GSM-Standard verbindlich durchzuführenden Maßnahmen zur Messung / Auswertung der Empfangsfeldstärke, des Paging-Telegramms und zum Funkzellwechsel (Cell Reselection, Handover) sind insbesondere in der GSM-Standardspezifikation 3GPP ETSI TS 51.010-1 Version 6.0.1 (2004-12), Release 6, Kapitel 20 Cell selection and reselection, Kapitel 20.11 - 20.13 ... list of six strongest neighbour carriers ... und insbesondere Kapitel 20.16 Downlink signalling failure nachzulesen.

GSM-Funkmodule werden zunehmend zur Fernüberwachung von Maschinen, Kraftfahrzeugen, Gebäuden etc. eingesetzt, um z. B. vor Einbruch, Diebstahl etc. zu schützen. So wird beispielsweise mit Sensoren ein Einbruch in ein Kraftfahrzeug über- wacht. Im Fall des Einbruchs gibt ein Sensor ein elektrisches Signal an das GSM-Funkmodul , wobei das GSM-Funkmodul dieses Signal weiterverarbeitet und als Meldung über das GSM- Funknetz zu einer berechtigten Stelle versendet.

In US 2004/0005858 A1 ist ein eingangs genanntes Verfahren beschrieben. Als erste Maßnahme wird dabei eine Abwesenheit eines Empfangs für ein verständliches Signal bei einer Kommunikationsausrüstung festgestellt. Für diesen Fall wird zunächst diskriminiert, ob eine fehlende Netzabdeckung vorliegt, indem ein durchschnittlicher Leistungspegel mit einem vorhergesagten Grundrauschen verglichen wird.

Wird jedoch beim Einbruch ein breitbandiger, das GSM-Frequenzspektrum abdeckender GSM-Störsender benutzt, kann das GSM-Funkmodul keine Funkverbindung zu einer aktuellen Basisstation oder Nachbarbasisstation herstellen. Das liegt daran, dass sich das Funksignal des breitbandigen Störsenders mit dem das Paging-Telegramm repräsentierende Funksignal der aktuellen Basisstation überlagert, so dass das Kommunikationsendgerät das Paging-Telegramm nicht mehr dekodieren kann. Das Kommunikationsendgerät wird wie oben beschrieben eine Verbindung zu einer Nachbarbasisstation herstellen wollen, so dass andere Frequenzkanäle benutzt werden. Wird jedoch ein breitbandiger Störsender eingesetzt, kann auch mit dieser ausgewählten Nachbarbasisstation und anderen potentiell auswählbaren Nachbarbasisstationen keine Funkverbindung mehr aufgebaut werden.

Aufgabe der vorliegenden Erfindung ist daher die Bereitstellung eines Verfahrens zur Erkennung eines Störsenders, der auf ein Kommunikationsendgerät wirkt, welches in zellularen Funknetzen, insbesondere im GSM-Mobilfunknetz, operiert sowie die Bereitstellung einer Gegenmaßnahme , um die Wirkung des Störsenders zu vermindern.

Die Aufgabe wird erfindungsgemäß durch ein Verfahren zur Erkennung eines auf ein Kommunikationsendgerät wirkenden Störsenders gelöst, wobei das Kommunikationsendgerät und eine Basisstation Bestandteile eines zellulären Funknetzes sind, wobei die Basisstation einen eigenen Versorgungsbereich besitzt und mindestens einen Funkkanal bedient, wobei das Kommunikationsendgerät, wenn es im Funknetz angemeldet ist, in wiederkehrenden Zeitabständen auf dem von der Basisstation bestimmten Funkkanal empfangene Funkkanalsignalpegel auswertet und andererseits eine von der Basisstation stammende, den Nachrichteninhalt betreffende weitere Meldung empfängt und auswertet, und wobei in dem Fall, dass das Kommunikationsendgerät im bestimmten Funkkanal einen oberhalb eines vorgegebenen Schwellwertes liegenden Funkkanalsignalpegel feststellt, aber andererseits die weitere Meldung nicht dekodieren kann, diesen Zustand als Störzustand interpretiert und ein Alarmsignal ausgibt.

Die Aufgabe wird des Weiteren durch ein Kommunikationsendgerät gelöst, welches zur Ausführung eines Verfahrens gemäß den Patentansprüchen 1 bis 11 ausgebildet ist.

Die Aufgabe wird des Weiteren durch eine Auswerteeinheit mit Schnittstellen zum Kommunikationsendgerät und mit einem Auswerteprogramm gelöst, welches zur Ausführung des Verfahrens gemäß der Patentansprüche 1 bis 11 ausgebildet ist und welches die vom Kommunikationsendgerät empfangenen Funkkanalsignalpegel und die weitere Meldung auswertet und die Ausgabe des Alarmsignals bei Feststellung eines Störzustandes initiiert.

Durch das erfindungsgemäße Verfahren zur Erkennung eines auf ein Kommunikationsendgerät wirkenden Störsenders, das erfindungsgemäße Kommunikationsendgerät und die erfindungsgemäße Auswerteeinheit kann als Gegenmaßnahme die Ausgabe eines Alarmsignals getroffen werden, um so die gewollte Wirkung des Störsenders zu vermindern oder sogar ganz auszuschalten.

Weiterbildungen der Erfindung ergeben sich aus den Unteransprüchen.

In vorteilhafter Weise wird das Verfahren dadurch weitergebildet, dass das Kommunikationsendgerät nach Ermittlung eines Störzustandes hinsichtlich der ersten Basisstation jedoch vor Ausgabe eines Alarmsignals einen Funkzellwechsel zu einer

Nachbarbasisstation vornimmt, auf deren Funkkanal es vor dem Störzustand bereits ein Funkkanalsignalpegel ausgewertet hat, und das Kommunikationsendgerät erst dann ein Alarmsignal ausgibt, nachdem das Kommunikationsendgerät im von dieser ausgewählten Nachbarbasisstation zugeordneten Funkkanal einen oberhalb eines vorgegebenen Schwellwertes liegenden Funkkanalsignalpegel feststellt, aber andererseits die weitere Meldung dieser ausgewählten Nachbarbasisstation nicht dekodieren kann. Dadurch kann mit noch größerer Wahrscheinlichkeit fest- gestellt werden, dass es sich um einen durch einen breitbandig operierenden Störsender hervorgerufenen Störzustand handelt. Die Ausgabe von Alarmsignalen aufgrund einer Nichtdekodierbarkeit der weiteren Meldung aus anderen funktechnischen Gründen kann so besser ausgeschlossen werden.

In weiterhin vorteilhafter Weise wird das im letzten Absatz beschriebene Verfahren dadurch weitergebildet, dass das Kommunikationsendgerät nach Ermittlung eines Störzustandes hinsichtlich der ausgewählten Nachbarbasisstation, jedoch vor Ausgabe eines Alarmsignals das Verfahren in Bezug auf weitere Nachbarbasisstationen fortführt. Dadurch erhöht sich die beschriebene Wahrscheinlichkeit der Erkennung von durch den Einsatz von Störsendern beabsichtigten Störungen und die beschriebene Unterscheidbarkeit im Hinblick auf "ungewollte" Störungen.

In weiterhin vorteilhafter Weise wird das Verfahren derart weitergebildet, dass das zelluläre Funknetz das GSM-Netz ist und die weitere Meldung ein so genanntes Paging-Telegramm ist. Dadurch kann die ohnehin standardisierte vom Kommunikationsendgerät auszuwertende Meldung zum Zwecke der Erkennung von Störsendern benutzt werden.

In einer weiteren Ausgestaltung der Erfindung des Verfahrens ist das Kommunikationsendgerät als GSM-Funkmodul ausgebildet und eine Auswerteeinheit, vorzugsweise ein in einem Speicher abgelegtes Auswerteprogramm, zur Auswertung des empfangenen Funkkanalsignalpegels und der weiteren Meldung ist entweder im GSM-Funkmodul selbst vorhanden oder abgesetzt vom GSM-Funkmodul ausgebildet, wobei die Auswerteeinheit auf vorgesehene Schnittstellen des GSM-Funkmoduls zugreift. Dadurch kann im letzteren Unterfall der so genannte Modulintegrator (Käufer des GSM-Funkmoduls), und nicht nur der Hersteller des GSM-Funkmoduls, das Auswerteprogramm erstellen und in einem Speicher seiner Applikation vorhalten.

In einer weiteren Ausgestaltung des Verfahrens wird das Alarmsignal über eine vom Kommunikationsendgerät beabstandete Antenne mittels einer Verbindung über das zellulare Funknetz abgesetzt. Dadurch wird aufgrund des größeren Abstandes zum Störsender und der damit korrespondieren geringeren Störstrahlung die Nutzung des zellularen Funknetzes für das Kommunikationsendgerät wieder möglich.

In weiterhin vorteilhafter Weise wird das im vorigen Abschnitt beschriebene Verfahren dadurch weitergebildet, dass ein an das zellulare Funknetz angeschlossener Zenträlcomputer, die abgesetzten Alarmsignale sammelt und weiterverarbeitet. Dadurch können beispielsweise Polizeibehöriden, die an den Zentralcomputer angeschlossen sind, unmittelbar eine Verfolgung eines Einbruchs oder Diebstahls vornehmen.

Weitere Vorteile der Erfindung ergeben sich aus der folgenden Beschreibung, welche in Verbindung mit den beigefügten Zeichnungen die Erfindung an Hand von zwei Ausführungsbeispielen erläutert.

Dabei zeigt in schematischer Darstellung die
- FIG 1: ein zellulares Funknetz mit einem Kommunikationsendgerät, einer Basisstation, einer Nachbarbasisstation und einem Störsender und die
- FIG 2: eine Weiterbildung der Erfindung hinsichtlich der Ausgabe eines Alarmsignals.

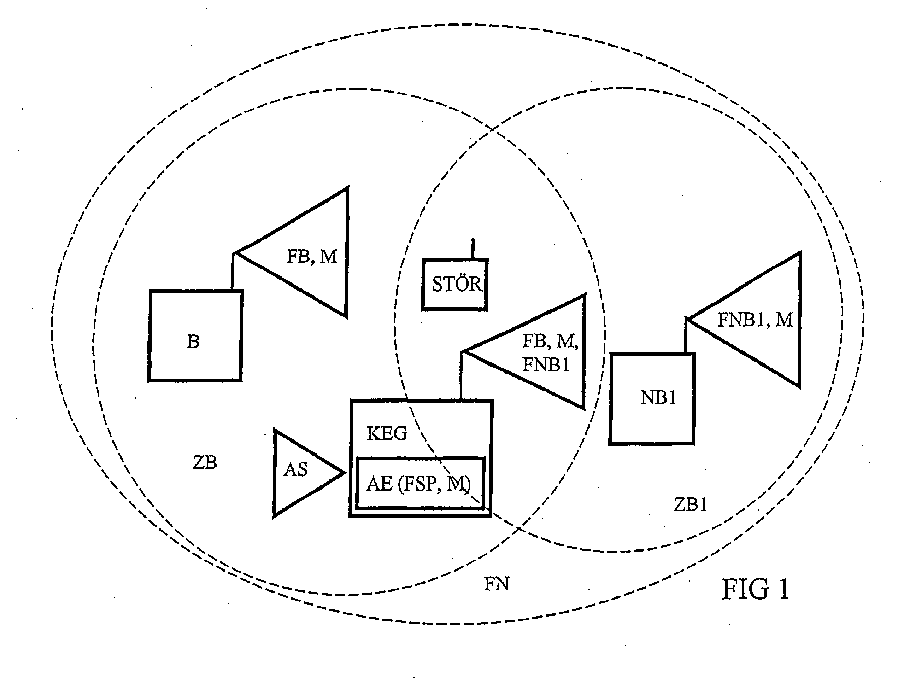

Die Figur 1 zeigt ein zellulares Funknetz FN, wie es beispielsweise aus dem GSM-Standard bekannt ist, mit einem Kommunikationsendgerät KEG, einer Basisstation B, einer Nachbarbasisstation NB1 und einem Störsender STÖR. Ein zelluläres Funknetz FN umfasst weitere (hier nicht gezeigte) Komponenten. Es werden jedoch im Folgenden nur die für die Erfindung relevanten Komponenten des zellulären Funknetzes FN beschrieben.

Das zelluläre Funknetz FN besteht aus einer Vielzahl von Funkzellen, von denen hier der von der Basisstation B aufgespannte Versorgungsbereich bzw. Funkzelle ZB und der von der Nachbarbasisstation NB1 aufgespannte Versorgungsbereich bzw. Funkzelle ZB1 gezeigt sind. Normalerweise sind im GSM-Funknetz um den Versorgungsbereich der Basisstation B herum sechs Versorgungsbereiche von Nachbarbasisstationen angeordnet, von denen im Hinblick auf die Übersichtlichkeit nur die Nachbarbasisstation NB1 mit dem.zugehörigen Versorgungsbereich ZB1 gezeigt ist.

Um eine für das Kommunikationsendgerät KEG lückenlose Versorgung zu ermöglichen, überlagern sich die Versorgungsbereiche ZB, ZB1. Die Basisstation B und die Nachbarbasisstation NB1 bedienen jeweils eine Vielzahl von unterschiedlichen Frequenzkanälen (Funkkanälen), sodass es im Überlappungsgebiet verschiedener Versorgungsbereiche ZB, ZB1 zu keinen Störungen durch ausgesendete Funksignale von jeweiligen Nachbarbasisstationen B, NB1 kommt.

Das Kommunikationsendgerät KEG ist im zellulären Funknetz FN angemeldet und würde einen nutzdatenbasierten Ruf über die Basisstation B aufbauen bzw. bezüglich eines nutzdatenbasierten Rufes von der Basisstation B gerufen werden. Um gegebenenfalls einen Funkzellwechsel zu der Nachbarbasisstation NB1 durchführen zu können, werden jedoch nicht nur bestimmte Signalisierungskanäle der Basisstation B sondern auch diejenigen der Nachbarbasisstation NB1 abgehört. Insbesondere wird sowohl von der Basisstation B als auch von der Nachbarbasisstation NB1 ein oder mehrere der auf den jeweiligen Frequenzkanälen bzw. Funkkanälen FB, FBN1 empfangene Funkkanalsignalpegel FSP durch das Kommunikationsendgerät KEG gemessen und ausgewertet.

Zusätzlich wird das so genannte Paging-Telegramm als eine den Nachrichteninhalt betreffende weitere Meldung M der Basisstation B durch das Kommunikationsendgerät KEG empfangen und ausgewertet. Kann das Paging-Telegramm "erfolgreich gelesen" werden, spricht man von einer Dekodierung des Paging-Telegramms. Das Kommunikationsendgerät KEG kann also Meldungen der Basisstation B verstehen. Dieses Paging-Telegramm wird periodisch von der Basisstation B ausgesendet und auch in wiederkehrenden Zeitabständen von dem Kommunikationsendgerät KEG empfangen, wobei nach dem Empfang das Kommunikationsendgerät KEG probiert, das Paging-Telegramm zu dekodieren.

Kann das empfangene Paging-Telegramm, wie im GSM-Standard obligatorisch, mehrmals hintereinander durch das Kommunikationsendgerät KEG nicht dekodiert werden, so initiiert das Kommunikationsendgerät einen Funkzellwechsel (Cell Reselection) zur Nachbarbasisstation NB1. Natürlich können andere Funkstandards hier kleinere oder größere Anzahlen von Nichtdekodierungen für die Initiierung eines Funkzellwechsels vorsehen.

Wenn sich ein Störsender STÖR in enger räumlicher Nähe zur Antenne des Kommunikationsendgeräts KEG befindet, kann der Störsender STÖR gezielt dazu eingesetzt werden, um die Kommunikation zwischen der Basisstation B und dem Kommunikationsendgerät KEG zu stören, so dass keine nutzdatenbasierte Nachrichten mehr zwischen der Basisstation B und dem Kommunikationsendgerät KEG ausgetauscht werden können.

Das Störsignal des Störsenders STÖR überlagert sich auf dem von der Basisstation B für das Kommunikationsendgerät KEG bestimmten Frequenzkanal bzw. Funkkanal FB auf dem das Paging-Telegramm übertragen wird. Diese Überlagerung der beiden Funksignale (Störsignal und das das Paging-Telegramm repräsentierende Funksignal) führt dazu, dass das Kommunikationsendgerät KEG das Paging-Telegramm nicht mehr dekodieren kann.

Andererseits misst das Kommunikationsendgerät KEG auf dem von der Basisstation B bestimmten Funkkanal FB einen hohen Funkkanalsignalpegel FSP, der sich aus der Addition des Funksignals der Basisstation B und des Funksignals des Störsenders STÖR ergibt.

Normalerweise musste bei hohem empfangenem Funkkanalsignalpegel FSP das Kommunikationsendgerät KEG auch das Paging-Telegramm dekodieren können.

Da das Kommunikationsendgerät KEG das Paging-Telegramm trotz des hohen empfangenen Funkkanalsignalpegels FSP nicht dekodieren kann, wird dieser Zustand durch das Kommunikationsendgerät KEG dahingehend interpretiert, dass hier ein Störzustand vorliegt, der durch den Einsatz eines Störsenders STÖR hervorgerufen wird.

Das Kommunikationsendgerät KEG gibt in diesem Fall ein Alarmsignal AS aus.

Hinsichtlich des empfangenen Funkkanalsignalpegels FSP auf dem Funkkanal FB werden vorgebbare Schwellwerte definiert, wobei das Kriterium für die Ausgabe eines Alarmsignals AS ein den vorgegebenen Schwellwert übersteigender empfangener Funkkanalsignalpegel FSP ist.

Das Kommunikationsendgerät KEG verfügt über eine Auswerteeinheit AE mit einem Speicher, in der die Schwellwerte hinterlegt sind, und ein Auswerteprogramm, mit dem die empfangenen Funkkanalsignalpegel FSP und das Paging-Telegramm ausgewertet werden. Wird der oben beschriebene Störzustand ermittelt, wird durch die Auswerteeinheit AE die Ausgabe des Alarmsignals AS initiiert, welches dann über geeignete Baugruppen des Kommunikationsendgeräts KEG ausgegeben wird.

Da man vor Ausgabe eines Alarmsignals AS sicher sein möchte, dass es sich um eine gezielte Störung mittels eines Störsenders STÖR handelt und nicht um eine zufällige Störung z.B. durch ungünstige Empfangsbedingungen zum Zeitpunkt des Empfangs des Paging-Telegramms durch das Kommunikationsendgerät KEG, kann das Auswerteprogramm derart ausgestaltet sein, dass es erst nach dem zweiten, dritten, vierten oder fünften empfangenen und nicht dekodierbaren Paging-Telegramm eine Ausgabe des Alarmsignals AS initiiert wird.

Auch kann das Auswerteprogramm so ausgestaltet sein, dass es beim Anstieg des empfangenen Funkkanalsignalpegels FSP in bestimmter Schwellwerte übersteigender Höhe nach einer vorgebbaren Anzahl von nicht dekodierbaren Paging-Telegrammen eine Ausgabe des Alarmsignals initiiert. Hier wird die Tatsache berücksichtigt, dass der Störsender STÖR erst eingeschaltet wird, wenn bereits die Signalisierungs- oder Datenkommunikation zwischen Basisstation B und Kommunikationsendgerät KEG im Gang ist und der Störsender STÖR von niedriger Störsendeleistung auf hohe Störsendeleistung hochgefahren wird. Auch hier wird der Fachmann abwägen und Schwellwerte bzw. Bedingungen festlegen, die eine gezielte Störung mit Ausgabe eines Alarmsignals AS von einer zufälligen Störung unterscheidbar machen.

Während des Störzustandes kann jedoch ohne zusätzliche Hilfsmittel kein Alarmsignal über das zelluläre Funknetz FN abgesetzt werden.

Kann das Kommunikationsendgerät KEG, wie im GSM-Standard obligatorisch, mehrmals hintereinander das empfangene Paging-Telegramm nicht dekodieren, initiiert das Kommunikationsendgerät KEG einen Funkzellwechsel zur Nachbarbasisstation NB1. Auch hier könnte der Fachmann bereits diesen Funkzellwechsel als Kriterium für die Ausgabe des Alarmsignals AS vorsehen.

Jetzt führt das Kommunikationsendgerät KEG, die bereits im Hinblick auf die Basisstation B beschriebene Überwachung des empfangenen Funkkanalsignalspegels FSP und die Dekodierung des Paging-Telegramms mit dieser ausgewählten Nachbarbasisstation NB1 durch. Auch werden Messungen / Auswertungen des Funkkanalsignalpegels FSP von anderen diese ausgewählte Nachbarbasisstation NB1 umgebenden Nachbarbasisstationen durch das Kommunikationsendgerät KEG durchgeführt.

Wird jetzt in Bezug auf diese Nachbarbasisstation NB1 ein Störzustand, hervorgerufen durch einen breitbandig operierenden, auch die Funkkanäle FNB1 dieser Nachbarbasisstation NB1 beeinträchtigenden, Störsender STÖR, durch das Kommunikationsendgerät KEG bestimmt, in dem im von dieser ausgewählten Nachbarbasisstation NB1 zugeordneten Funkkanal FNB1 ein oberhalb eines vorgegebenen Schwellwertes liegender Funkkanalsignalpegel FSP festgestellt wird, aber andererseits das Paging-Telegramm dieser ausgewählten Nachbarbasisstation NB1 nicht durch das Kommunikationsendgerät KEG dekodiert werden kann, gibt das Kommunikationsendgerät KEG ein Alarmsignal AS aus. Voraussetzung dafür ist selbstverständlich dass nicht bereits vor dem Funkzellwechsel ein Alarmsignal AS durch das Kommunikationsendgerät KEG ausgegeben wurde.

Die hinsichtlich der Basisstation B beschriebenen technischen Maßnahmen zur Abwägung, um eine gezielte Störung durch einen Störsender STÖR von einer zufälligen Störung unterscheidbar zu machen, gelten in gleicher Weise im Hinblick auf die ausgewählte Nachbarbasisstation NB1.

Soll die Wahrscheinlichkeit weiter erhöht werden, dass es sich um eine gezielte Störung durch einen breitbandig operierenden Störsender STÖR handelt, kann das beschriebene Verfahren dahingehend weiter ausgebildet werden, dass vor einem weiteren Funkzellwechsel zu einer weiteren (nicht gezeigten) Nachbarbasisstation keine Ausgabe eines Alarmsignals AS durch das Kommunikationsendgerät KEG erfolgt, sondern erst dann ein Alarmsignal AS ausgegeben wird, wenn auch ein vom Kommunikationsendgerät KEG ermittelter Störzustand im Hinblick auf die weitere Nachbarbasisstation vorliegt.

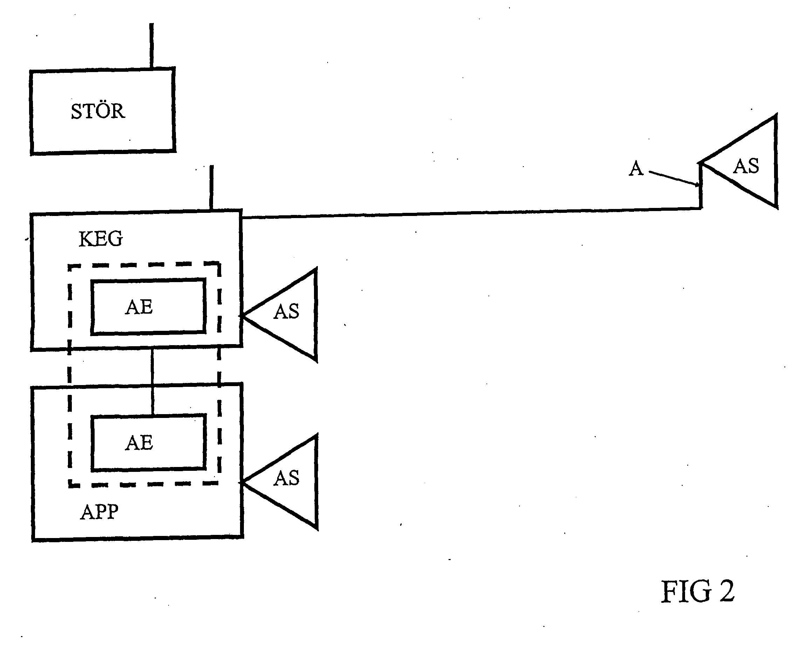

Die Figur 2 zeigt eine Weiterbildung der Erfindung hinsichtlich der Ausgabe eines Alarmsignals AS.

Die Auswerteeinheit AE kann sowohl im als Kommunikationsendgerät KEG ausgebildeten GSM-Funkmodul selbst oder in einer Applikation APP z.B. einer Alarmanlage, einem Notebook, einem Mobiltelefon, einer Maschine, einem Kraftfahrzeug, einem Gebäude etc. ausgebildet sein (hier als die Auswerteeinheit AE umgebender gestrichelter Rahmen angedeutet). Ist die Auswerteeinheit AE Bestandteil der Applikation APP erfolgt die Ausgabe des Alarmsignals AS durch die Applikation APP. Natürlich müssen die durch das Kommunikationsendgerät KEG empfangenen Funkkanalsignalpegel FSP und das empfangene Paging-Telegramm an die sich in der Applikation APP befindliche Auswerteeinheit AE übertragbar sein, bzw. geeignete leitungsbasierte oder funkbasierte (nicht vom Störsender STÖR beeinträchtigte) Schnittstellen im Kommunikationsendgerät KEG und der Applikation APP vorgesehen werden. Beispielsweise könnte das Auslesen der von dem Kommunikationsendgerät KEG empfangenen Signale mittels AT-Kommandos erfolgen.

Das Alarmsignal AS kann vorzugsweise ein akustisches oder optisches Signal oder ein Funksignal sein.

Mittels eines im weiteren beschriebenen Verfahrens kann selbst über das zellulare Funknetz FN die Ausgabe des Alarmsignals AS erfolgen. Dazu wird eine von dem Kommunikationsendgerät KEG beabstandete Antenne vorgesehen.

Ermittelt das Kommunikationsendgerät KEG einen durch einen Störsender STÖR hervorgerufenen Störzustand, so schaltet es ein Funkteil des Kommunikationsendgeräts KEG an die beabstandene Antenne an, über die das Alarmsignal AS über das zelluläre Funknetz FN übertragen werden kann. Dabei macht man sich die Tatsache zu Nutze, dass ein Störsender STÖR, um eine gute Störung zu erreichen, immer möglichst nah an der Antenne des Kommunikationsendgeräts KEG platziert werden muss. Da aber mit der Entfernung die Störstrahlungsstärke stark nachlässt, lässt sich bei genügend weit vom Kommunikationsendgerät KEG beabstandenen Antennen eine Aussendung des Alarmsignals AS über das zelluläre Funknetz FN erreichen. Die Signalübertragung zwischen Kommunikationsendgerät KEG und beabstandeter Antenne kann sowohl leitungsgebunden als auch funkbasiert (nicht vom Störsender STÖR beeinträchtigt) erfolgen.

Im Fall der Übertragung des Alarmsignals AS über das zelluläre Funknetz FN können in einem an dem zellulären Funknetz FN angeschlossenen Zentralcomputer das eingehende Alarmsignal AS und weitere von anderen Kommunikationsendgeräten stammende Alarmsignale gesammelt, weiterverarbeitet und insbesondere den Polizeibehörden unmittelbar zugeführt werden. Bei sich bewegenden gestohlenen Kraftfahrzeugen, in denen ein GSM-Funkmodul vorhanden ist, kann aus einer periodischen Aussendung des Alarmsignals AS und einer aufgrund der Kommunikation zu einer bestimmten Basisstation, von der die Position bekannt ist, der Aufenthaltsbereich des gestohlenen Kraftfahrzeugs stark eingeschränkt werden, und so ein Zugriff durch die Polizeibehörden beschleunigt werden.

Die Erfindung ist nicht auf das spezielle Ausführungsbeispiel beschränkt, sondern schließt weitere nicht explizit offenbarte Abwandlungen mit ein, solange von dem Kern der Erfindung Gebrauch gemacht wird.

Das gilt insbesondere dann, wenn andere zelluläre Funknetze einschließlich Basisstationen und Kommunikationsendgeräte, die nicht nach dem GSM-Standard sondern nach anderen Funkstandards, von denen dem Fachmann eine Vielzahl bekannt sind, arbeiten, von der Erfindung Gebrauch machen.

Auch ist die Erfindung hinsichtlich der weiteren Meldung M bzw. die Nutzung ihrer Nichtdekodierbarkeit für die Ausgabe eines Alarmsignals AS nicht auf das Paging-Telegramm als weiterer Meldung M beschränkt.

## Patentansprüche

1. Verfahren zur Erkennung eines auf ein Kommunikationsendgerät (KEG) wirkenden Störsenders (STÖR), wobei das Kommunikationsendgerät (KEG) und eine Basisstation (B) Bestandteile eines zellulären Funknetzes (FN) sind, wobei die Basisstation (B) einen eigenen Versorgungsbereich (ZB) besitzt und mindestens einen Funkkanal (FB) bedient,
**dadurch gekennzeichnet, dass**
das Kommunikationsendgerät (KEG), wenn es im Funknetz (FN) angemeldet ist, in wiederkehrenden Zeitabständen auf dem von der Basisstation (B) bestimmten Funkkanal (FB) empfangene Funkkanalsignalpegel (FSP) auswertet und andererseits ein von der Basisstation (B) stammendes weiteres Funksignal auf einem Signalisierungskanal, welches eine Meldung (M) repräsentiert, empfängt und deren Nachrichteninhalt auswertet, und wobei in dem Fall, dass das Kommunikationsendgerät (KEG) im bestimmten Funkkanal (FB) einen oberhalb eines vorgegebenen Schwellwertes liegenden Funkkanalsignalpegel (FSP) feststellt, aber andererseits den Nachrichteninhalt der Meldung (M) nicht dekodieren kann, diesen Zustand als Störzustand interpretiert und ein Alarmsignal (AS) ausgibt.

2. Verfahren nach Anspruch 1, **dadurch gekennzeichnet, dass** das weitere Funksignal ein von der Basisstation (B) periodisch ausgesendetes Funksignal ist.

3. Verfahren nach Anspruch 1 oder 2 **dadurch gekennzeichnet, dass** in dem Fall, dass das Kommunikationsendgerät (KEG) im bestimmten Funkkanal (FB) einen oberhalb eines vorgegebenen Schwellwertes liegenden Funksignalpegel (FSP) feststellt, aber andererseits den Nachrichteninhalt der Meldung (M) mehrmals hintereinander nicht dekodieren kann, diesen Zustand als Störzustand interpretiert und ein Alarmsignal (AS) ausgibt.

4. Verfahren nach einem der Ansprüche 1 bis 3
**dadurch gekennzeichnet,**
**dass** das Kommunikationsendgerät (KEG) nach Ermittlung eines Störzustandes hinsichtlich der ersten Basisstation (B) jedoch vor Ausgabe eines Alarmsignals (AS) einen Funkzellwechsel zu einer Nachbarbasisstation (NB1) vornimmt, auf deren Funkkanal (FNB1) es vor dem Störzustand bereits ein Funkkanalsignalpegel (FSP) ausgewertet hat, und das Kommunikationsendgerät (KEG) erst dann ein Alarmsignal (AS) ausgibt, nachdem das Kommunikationsendgerät (KEG) im von dieser ausgewählten Nachbarbasisstation (NB1) zugeordneten Funkkanal (FNB1) einen oberhalb eines vorgegebenen Schwellwertes liegenden Funkkanalsignalpegel (FSP) feststellt, aber andererseits ein weiteres Funksignal, welches eine Meldung (M) dieser ausgewählten Nachbarbasisstation (NB1) repräsentiert, empfängt und deren Nachrichteninhalt nicht dekodieren kann.

5. Verfahren nach Anspruch 4,
**dadurch gekennzeichnet,**
**dass** das Kommunikationsendgerät (KEG) nach Ermittlung eines Störzustandes hinsichtlich der ausgewählten Nachbarbasisstation (NB1), jedoch vor Ausgabe eines Alarmsignals (AS) das Verfahren in Bezug auf weitere Nachbarbasisstationen fortführt.

6. Verfahren nach einem der vorstehenden Ansprüche,
**dadurch gekennzeichnet,**
**dass** das zelluläre Funknetz (FN) das GSM-Netz ist und die Meldung (M) ein so genanntes Paging-Telegramm ist.

7. Verfahren nach einem der vorstehenden Ansprüche,
**dadurch gekennzeichnet,**
**dass** das Kommunikationsendgerät (KEG) als GSM-Funkmodul ausgebildet ist und dass eine Auswerteeinheit (AE) zur Auswertung des empfangenen Funkkanalsignalpegels (FSP) und des Nachrichteninhalts der Meldung (M) entweder im GSM-Funkmodul selbst vorhanden ist oder abgesetzt vom GSM-Funkmodul auf vorgesehene Schnittstellen des GSM-Funkmoduls zugreift.

8. Verfahren nach Anspruch 7 **dadurch gekennzeichnet, dass** die Auswerteeinheit (AE) ein in einem Speicher abgelegtes Auswerteprogramm ist.

9. Verfahren nach Anspruch 7 oder 8 **dadurch gekennzeichnet, dass** die Auswerteeinheit (AE) Bestandteil einer Applikation ist und ein Alarmsignal (AS) durch die Applikation ausgegeben wird.

10. Verfahren nach einem der vorstehenden Ansprüche,
**dadurch gekennzeichnet,**
**dass** das Alarmsignal (AS) über eine vom Kommunikationsendgerät (KEG) beabstandete Antenne mittels einer Verbindung über das zellulare Funknetz (FN) abgesetzt wird.

11. Verfahren nach Anspruch 10
**dadurch gekennzeichnet,**
**dass** ein an das zellulare Funknetz (FN) angeschlossener Zentralcomputer, die abgesetzten Alarmsignale (AS) sammelt und weiterverarbeitet.

12. Kommunikationsendgerät (KEG) ausgebildet zur Ausführung eines Verfahrens gemäß der Ansprüche 1 bis 11.

13. Auswerteeinheit (AS) mit Schnittstellen zum Kommunikationsendgerät (KEG) und mit einem Auswerteprogramm, ausgebildet zur Ausführung des Verfahrens gemäß der Ansprüche 1 bis 11, welche die vom Kommunikationsendgerät (KEG) empfangenen Funkkanalsignalpegel (FSP) und den Nachrichteninhalt der weiteren Meldung (M) auswertet und die Ausgabe des Alarmsignals (AS) bei Feststellung eines Störzustandes initiiert.

## Claims

1. Method for detecting a jamming transmitter (STÖR) affecting a communication terminal (KEG), wherein said communication terminal (KEG) and a base station (B) are components of a cellular radio network (FN), and wherein said base station (B) has its own coverage area (ZB) and uses at least one radio channel (FB),
**characterized in that**
the communication terminal (KEG), when it is registered in the radio network (FN), evaluates radio channel signal levels (FSP) that are received at periodic intervals on the radio channel (FB) determined by the base station (B), but also receives and evaluates the message content of a further radio signal on a signalling channel, said further radio signal originating from the base station (B) and representing a message (M), wherein, in the case that the communication terminal (KEG) detects a radio channel signal level (FSP) that exceeds a predefined threshold value in the specified radio channel (FB), but is unable to decode the message content of the message (M), this state is interpreted as an interference state and an alarm signal is emitted (AS).

2. Method according to claim 1, **characterized in that** the further radio signal is a radio signal periodically emitted by the base station (B).

3. Method according to claim 1 or 2, **characterized in that** the communication terminal (KEG) detects a radio signal level (FSP) in the specified radio channel (FB) that exceeds a predefined threshold value, but, being unable to decode the message content of the message (M) several times in succession, interprets this status as an interference state and emits an alarm signal (AS).

4. Method according to one of claims 1 to 3,
**characterized in that**
the communication terminal (KEG), after detecting an interference state with regard to the first base station (B) but before emitting an alarm signal (AS), switches to the radio cell of an adjacent base station (NB1) on whose radio channel (FNB1) it has already evaluated a radio channel signal level (FSP) before the interference state, and the communication terminal (KEG) only emits an alarm signal (AS) after the communication terminal (KEG) in the radio channel (FNB1) assigned by this selected adjacent base station (NB1) detects a radio channel signal level (FSP) exceeding a predefined threshold value, but also receives a further radio signal which represents a message (M) from this selected adjacent base station (NB1), the message content of which it is unable to decode.

5. Method according to claim 4,
**characterized in that**
the communication terminal (KEG), after detecting an interference state with regard to the selected adjacent base station (NB1) but before emitting an alarm signal (AS), continues the process with reference to further adjacent base stations.

6. Method according to one of the preceding claims,
**characterized in that**
the cellular radio network (FN) is the GSM network and the message (M) is a so-called paging telegram.

7. Method according to one of the preceding claims,
**characterized in that**
the communication terminal (KEG) is designed as a GSM radio module and **in that** an evaluation unit (AE) for evaluating the received radio channel signal level (FSP) and the message content of the message (M) is either present in the GSM radio module itself, or accesses the provided interfaces on the GSM radio module remotely from the GSM radio module.

8. Method according to claim 7, **characterized in that** the evaluation unit (AE) is an evaluation program stored in a memory.

9. Method according to claim 7 or 8, **characterized in that** the evaluation unit (AE) is part of an application and an alarm signal (AS) is emitted by said application.

10. Method according to one of the preceding claims,
**characterized in that**
the alarm signal (AS) is transmitted via an antenna which is spaced apart from the communication terminal (KEG), by means of a connection via the cellular radio network (FN).

11. Method according to claim 10,
**characterized in that**
a central computer connected to the cellular radio network (FN) gathers and processes the transmitted alarm signals (AS).

12. Communication terminal (KEG) designed to execute a method in accordance with claims 1 to 11.

13. Evaluation unit (AE) with interfaces to the communication terminal (KEG) and with an evaluation program, designed to execute the method in accordance with claims 1 to 11, which evaluates the radio channel signal levels (FSP) received from the communication terminal (KEG) and the message content of the further message (M) and initiates the output of the alarm signal (AS) when an interference state is detected.

## Revendications

1. Procédé d'identification d'un émetteur (STÖR) parasite agissant sur un terminal (KEG) de communication, dans lequel le terminal (KEG) de communication et une station (B) de base font partie d'un réseau (FN) radio cellulaire, la station (B) de base ayant sa propre zone (ZB) de desserte et faisant fonctionner au moins un canal (FB) radio,
**caractérisé en ce que**
le terminal (KEG) de communication, lorsqu'il est annoncé dans le réseau (FN) radio, exploite à des intervalles de temps récurrents des niveaux (FSP) du signal de canal radio reçu sur le canal (FB) radio déterminé par la station (B) de base et, d'autre part, un autre signal radio provenant de la station (B) de base sur un canal de signalisation, qui représente un message (M) et dont il exploite le contenu informatif, et dans lequel dans le cas où le terminal (KEG) de communication constate dans le canal (FB) radio déterminé un niveau (FSP) du signal de canal radio se trouvant au-dessus d'une valeur de seuil prescrite mais, d'autre part, ne peut pas décoder le contenu informatif du message (M), interprète cet état comme un état parasite et émet un signal (AS) d'alerte.

2. Procédé suivant la revendication 1,
**caractérisé en ce que**
l'autre signal radio est un signal radio émis périodiquement par la station (B) de base.

3. Procédé suivant la revendication 1 ou 2,
**caractérisé en ce que**
dans le cas où le terminal (KEG) de communication constate dans le canal (FB) déterminé un niveau (FSP) du signal de canal radio se trouvant au-dessus d'une valeur de seuil prescrite mais, d'autre part, ne peut pas décoder plusieurs fois de suite le contenu informatif du message (M), il interprète cet état comme un état parasite et émet un signal (AS) d'alerte.

4. Procédé suivant l'une des revendications 1 à 3,
**caractérisé en ce que**
le terminal (KEG) de communication effectue, après la détermination d'un état parasite du point de vue de la première station (B) de base mais avant l'émission d'un signal (AS) d'alerte, un échange de cellules radio vers une station (NB1) de base voisine sur le canal (FNB1) radio duquel il a été exploité déjà un niveau (FSP) du signal de canal radio avant l'état parasite et le terminal (KEG) de communication n'émet un signal radio d'alerte qu'après que le terminal (KEG) de communication constate, dans le canal (FNB1) radio associé à cette station (NB1) de base voisine sélectionnée, un niveau (FSP) du signal de canal radio se trouvant au-dessus d'une valeur de seuil prescrite mais, d'autre part, reçoit un autre signal radio qui représente un message (M) de cette station (NB1) de base voisine sélectionnée et dont il ne peut pas décoder le contenu informatif.

5. Procédé suivant la revendication 4,
**caractérisé en ce que**
le terminal (KEG) de communication poursuit, après détermination d'un état parasite du point de vue de la station (NB1) de base voisine sélectionnée mais avant l'émission d'un signal (AS) d'alerte, le procédé en relation avec d'autres stations de bases voisines.

6. Procédé suivant l'une des revendications précédentes,
**caractérisé en ce que**
le réseau (FN) radio cellulaire est le réseau GSM et le message (M) ce que l'on appelle en télégramme paging.

7. Procédé suivant l'une des revendications précédentes,
**caractérisé en ce que**
le terminal (KEG) de communication est constitué en module radio GSM et **en ce qu'**une unité (AE) d'exploitation, pour l'exploitation du niveau (FSP) du signal de canal radio reçu et du contenu informatif du message (M) et est présente soit dans le module radio GSM soi-même ou, éloignée du module radio GSM, accède à des interfaces prévues du module radio GSM.

8. Procédé suivant la revendication 7, **caractérisé en ce que** l'unité (AE) d'exploitation est un programme d'exploitation mémorisé dans une mémoire.

9. Procédé suivant l'une des revendications 7 ou 8,
**caractérisé en ce que** l'unité (AE) d'exploitation fait partie d'une application et un signal (AS) d'alerte est émis par l'application.

10. Procédé suivant l'une des revendications précédentes,
**caractérisé en ce que**
le signal (AS) d'alerte est transmis au moyen d'une liaison par le réseau (FN) radio cellulaire par l'intermédiaire d'une antenne à distance du terminal (KEG) de communication.

11. Procédé suivant la revendication 10,
**caractérisé en ce que**
un ordinateur central raccordé au réseau (FN) radio cellulaire collecte et retraite les signaux (AS) d'alarme transmis.

12. Terminal (KEG) de communication constitué pour la mise en oeuvre d'un procédé suivant les revendications 1 à 11.

13. Unité (AS) d'exploitation ayant des interfaces vers le terminal (KEG) de communication et un programme d'exploitation constitué pour la mise en oeuvre du procédé suivant les revendications 1 à 11, qui exploite les niveaux (FSP) du signal de canal radio reçus par le terminal (KEG) de communication et le contenu informatif de l'autre message (M) et lance l'émission du signal (AS) d'alerte lors de la constatation d'un état parasite.
